# EUROPEAN PATENT APPLICATION

(11) **EP 1 760 344 A1**
(43) Date of publication of application: **07.03.2007**
(21) Application number: 05107952.3
(22) Date of filing: 31.08.2005
(51) Int. Cl.: F16C 33/38, F16C 43/04, F16C 33/46

(54) **A bearing unit for the hub of a vehicle wheel**

(71) Applicant: Aktiebolaget SKF, 415 50 Göteborg (SE)
(72) Inventor: Vignotto, Angelo, 10134 Torino (IT); Savarese, Claudio, 10060 Airasca (Torino) (IT)
(74) Representative: Fioravanti, Corrado

(57) **Abstract**

The unit comprises an outer race (14), a pair of inner race half-races (10a, 10b), two sets of balls (12a, 12b) interposed between the outer race (14) and the inner half-races (10a, 10b), and a pair of retaining cages (13a, 13b) for the balls (12a, 12b). At least one (13a) of the cages has a set of fins (13c) projecting radially outwards to engage by snap-locking in a corresponding radial groove (141) formed in the outer race (14). The cage (13a) axially retains the corresponding half-race (10a) with respect to the outer race (14) in the transfer stages which precede the mounting of the pre-assembled bearing unit on the wheel hub of a motor vehicle.

## Description

The present invention relates to a bearing unit for the hub of a motor vehicle wheel, where the bearing unit comprises an outer race, a pair of axially adjacent inner half-races to be mounted on a central tubular hub, two sets of rolling elements interposed between the inner races and the outer race, and two retaining cages for the rolling elements.

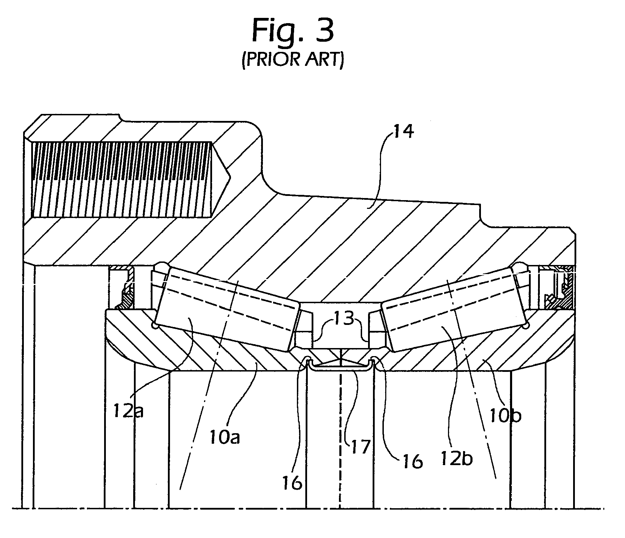

Manufacturers and assemblers of bearing units are faced with the problem of preventing the components of a pre-assembled bearing unit from being accidentally lost as a result of impacts during the stages of manipulation and transfer preceding the final mounting of the bearing unit on to the wheel hub of a vehicle. For a better understanding of this problem, reference should be made to the known solutions shown in Figures 3 to 5 of the attached drawings.

As shown in Figure 3, in some cases the aforesaid problem is solved by forming two grooves 16 in the inner cylindrical surfaces of the inner half-races 10a and 10b. A temporary retaining ring 17, usually an open ring of spring steel, is engaged in the grooves 16. By fixing the two inner half-races together in the axial direction, the ring 17 prevents each of them from accidentally sliding out of the outer race 14, thus preventing the rolling elements 12a, 12b from falling out. Although this solution is effective, it entails high costs for the production of the ring 17 of spring steel. It is also rather difficult to engage the ring 17 in the grooves 16 on the inner surfaces of the half-races 10.

In other cases, use is made of a temporary "disposable" retaining ring of plastics material, which is less expensive than steel, but an additional operation is required to remove this ring from the bearing unit before the latter is mounted on the hub.

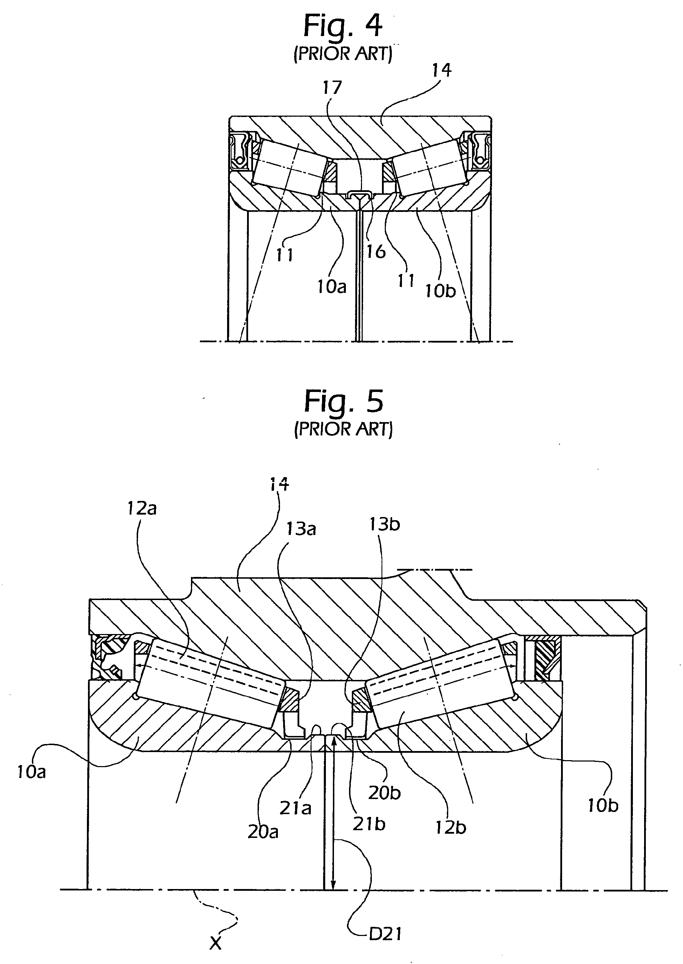

In another known solution (Figure 4), an open retaining ring 17 of spring steel is mounted in engagement grooves 16 formed on the outer cylindrical surfaces of the half-races 10a, 10b.

US 6 491 441-B2 (Figure 5) discloses a tapered roller bearing unit having inner half-races with a central step 21a, 21b having a diameter smaller than the minimum diameter of the races of the inner half-races 10a, 10b. The roller retaining cages 13a, 13b have appendages projecting radially inwards which are snap-locked into radial grooves 20a, 20b formed in the inner half-races. This solution cannot be used if the inner half-races have a small radial thickness, as required by many motor vehicle manufacturers, since the forming of the grooves 20a, 20b would weaken the half-races excessively.

In view of the above, the object of the present invention is to provide a pre-assembled bearing unit free of additional components, which can effectively keep the various parts of the pre-assembled unit together up to the moment of mounting on the hub.

This and other objects and advantages, which are explained more fully below, are achieved according to the present invention by a bearing unit as defined in Claim 1. Preferred embodiments of the invention are defined in the dependent claims.

The characteristics and advantages of the invention will be made clear by the following detailed description of a preferred embodiment thereof, reference being made to the attached drawings provided for guidance and without restrictive intent, in which:
- Figure 1 is an axial sectional view of a first embodiment of a bearing unit according to the invention;
- Figure 2 is an axial sectional view of a second embodiment of a bearing unit according to the invention; and
- Figures 3 to 5 are partial axial sectional views of bearing units of known types.

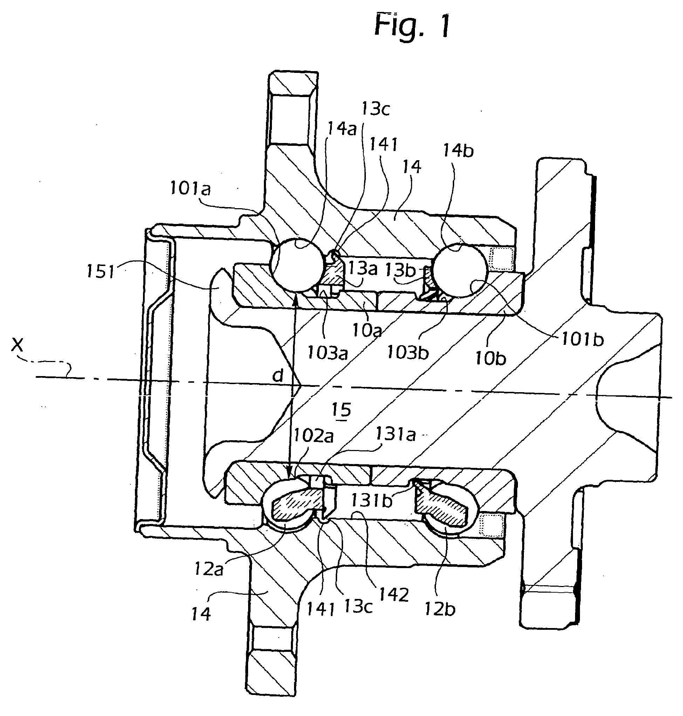

With reference to Figure 1, a bearing unit comprises an outer race 14, a pair of axially adjacent radially inner races (or half-races) 10a and 10b, two sets of rolling elements 12a, 12b, which in this example are balls, interposed between the outer race 14 and the inner races 10a, 10b respectively, and a pair of retaining cages 13a and 13b for the sets of balls 12a and 12b respectively. The outer race 14 has outer raceways 14a, 14b, while the inner half-races 10a, 10b have respective inner raceways 101a, 101b.

As used herein, the terms "axially inner" and "axially outer" are to be interpreted with reference to the condition in which the unit is mounted on a motor vehicle. Similarly, the terms "radially inner" and "radially outer" are to be interpreted with reference to the axis of rotation x of the bearing.

After being pre-assembled, the bearing unit is mounted by fitting the inner half-races 10a, 10b on a central tubular hub 15.

According to the invention, at least one of the cages (the cage 13a in the example of Figure 1) has a set of flexible fins 13c spaced at equal intervals around the circumference and projecting radially outwards, which are snap-locked into at least one corresponding radial groove 141 formed in a radially inner surface of the outer races 14 close to one of the outer raceways 14a, 14b. The said cage 13a, therefore, fixes the half-race 10a with the balls 12a to the outer race 14 in an axial direction, and prevents the half-race 10a from accidentally sliding out of the outer race 14, thus preventing the balls 12a from falling out and being lost.

The sequence of the principal steps of the method for assembling a bearing unit according to the invention is as follows. The balls 12a, 12b are first inserted into the corresponding cages 13a, 13b. The balls with their cages are then mounted on the corresponding inner half-races 10a, 10b. The outer race 14 is orientated vertically, with its "inboard" side (or axially inner side, on the right-hand side in Figure 1) facing upwards. The half-race 10b with its balls 12b and cage 13b is fitted from above into the outer race 14. In this vertical position, the weight of the half-race 10b falls on the raceway 14b of the outer race 14. The half-race 10a with its balls 12a and cage 13a is fitted from below into the outer race 14, the fins 13c being snapped into the groove 141. The balls 12a are retained in position in the outer race 14 by the cage 13a, while the half-race 10a remains engaged with the balls 12a because of the shape of the raceway 101a, whose end 102a close to the centre of the bearing has a greater diameter than the minimum diameter d of the said raceway. After being pre-assembled in this way, the bearing unit can be transferred and mounted on the tubular hub 15, to which it is finally fixed by the cold deformation of a terminal edge 151 of the hub, or by other known fixing means.

If the radial thickness of the inner half-races permits, as in the illustrated example, it is also possible to form radial grooves 103a, 103b in one or both of the inner half-races 10a, 10b, and to use a second set of fins 131a, 131b projecting radially inwards from the cages 13a, 13b to engage by snap-locking in the corresponding inner grooves 103a, 103b.

As will be appreciated, the components of the bearing unit according to the invention are retained in the correct position without the addition of further temporary retaining rings as discussed in the introduction. The groove 141 is formed in a component (the outer race 14) which has a considerable thickness, and therefore does not weaken the structure of the bearing.

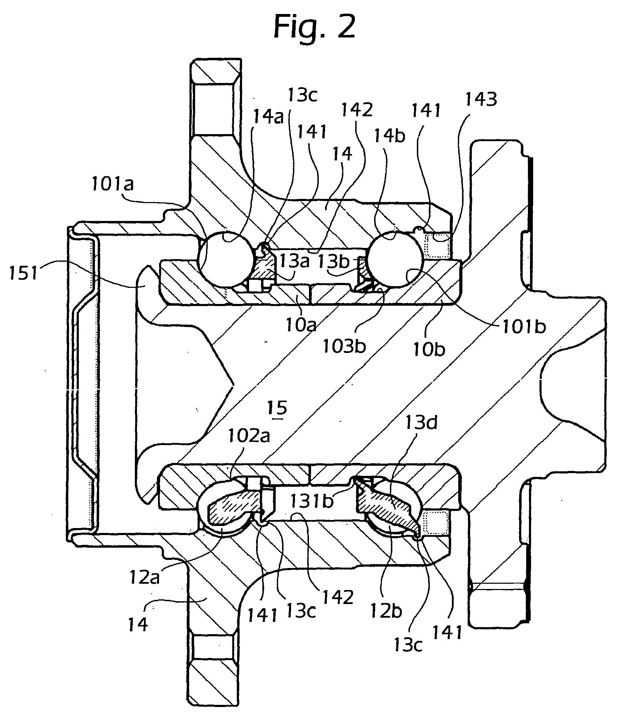

The groove 141 which acts as the engagement seat for a cage can equally well be formed in the inner cylindrical surface 142 of the race 14 (as shown in Figure 1) or, as shown schematically in the example of Figure 2, in a cylindrical surface 143 towards one of the axial ends of the bearing. In this case, the projecting fins 13c extend from the transverse walls 13d which space the balls apart along the circumference.

It is to be understood that the invention is not limited to the embodiments described and illustrated herein, which are to be considered as examples of embodiment of the bearing unit; in fact, the invention can be modified in respect of the forms and arrangements of parts and details of construction, and in respect of its operation. For example, the number and distribution of the fins 13c can be specified differently from what is shown in the attached figures. Finally, although the invention was devised particularly for application to an angular contact ball bearing unit, as shown in Figures 1 and 2, it is equally applicable to bearing units having rolling elements of different types, for example tapered rollers, or of the hybrid type, with a combination of rollers and balls, etc.

## Claims

1. A bearing unit for the wheel hub of a motor vehicle, comprising:
- a radially outer race (14),
- a pair of radially inner half-races (10a, 10b) adjacent in the axial direction,
- two sets of rolling elements (12a, 12b) interposed radially between the outer race (14) and the inner half-races (10a, 10b),
- a pair of retaining cages (13a, 13b) for the sets of rolling elements (12a, 12b);
**characterized in that** at least one (13a) of the cages has a plurality of portions (13c) projecting radially outwards to engage in at least one corresponding radial groove (141) formed in the outer race (14), whereby the cage (13a) axially retains the corresponding half-race (10a) with respect to the outer race (14).

2. A bearing unit according to Claim 1, **characterized in that** the projecting portions (13c) are circumferentially equally spaced around the axis of rotation (x) of the bearing unit.

3. A bearing unit according to Claim 1 or 2, **characterized in that** the projecting portions (13c) comprise flexible fins capable of snap-locking into the groove (141).

4. A bearing unit according to Claim 1, **characterized in that** the radial groove (141) is formed close to a raceway (14a, 14b) of the outer race (14).

5. A bearing unit according to Claim 4, **characterized in that** the groove (141) is formed in an inner cylindrical surface (142) of the outer race (14).

6. A bearing unit according to Claim 4, **characterized in that** the groove (141) is formed in a cylindrical surface (143) of the outer race (14) close to an axial end of the bearing.

7. A bearing unit according to Claim 1, **characterized in that** each cage (13a, 13b) has a corresponding plurality of portions (13c) projecting radially outwards to engage in corresponding radial grooves (141) formed in the outer race (14) in such a way that the cages (13a, 13b) axially retain the corresponding half-races (10a, 10b) with respect to the outer race (14).

8. A bearing unit according to any one of the preceding claims, **characterized in that** the bearing unit is an angular contact ball bearing unit.

9. A bearing unit according to any one of the preceding claims, **characterized in that** at least one of the cages (13a, 13b) has a second plurality of portions (131a, 131b) projecting radially inwards to engage in at least one corresponding radial groove (103a, 103b) formed in at least one corresponding inner half-race (10a, 10b) to limit the relative axial movements between this half-race and the said cage.
